Europäisches Patentamt

European Patent Office

Office européen des brevets

(11) Numéro de publication: **0 389 320**

**A1**

(12) **DEMANDE DE BREVET EUROPEEN**

(21) Numéro de dépôt: **90400575.8**

(22) Date de dépôt: **01.03.90**

(51) Int. Cl.5: **G01N 27/22**

(30) Priorité: **03.03.89 FR 8902763**

(43) Date de publication de la demande:
**26.09.90 Bulletin 90/39**

(84) Etats contractants désignés:
**DE DK GB IT**

(71) Demandeur: **DOLIGE DEVELOPPEMENT INDUSTRIEL D.D.I., SOCIETE ANONYME**
**20, Avenue Marcelin Berthelot**
**F-92390 Villeneuve La Garenne(FR)**

(72) Inventeur: **Meles, Jean-Pierre**
**6, Avenue de Nonneville**
**F-93600 Aulnay Sous Bois(FR)**

(74) Mandataire: **Chambon, Gérard**
**Cabinet Chambon 6 et 8 avenue Salvador Allende**
**F-93804 Epinay-sur-Seine Cédex(FR)**

(54) **Appareil de mesure en continu des teneurs en substances d'un produit granuleux, pulvérulent ou visqueux.**

(57) L'invention concerne un appareil de mesure en continu des teneurs en substances d'un produit granuleux, pulvérulent ou visqueux et plus particulièrement un appareil pour mesurer la teneur en humidité des céréales.

L'appareil selon l'invention comporte une cellule de mesure (6) dans laquelle on fait passer le produit (8) à analyser, et un système (11) de traitement des informations provenant de la cellule, lesquelles dépendent de la nature et de la constitution du produit et il est remarquable en ce qu'il est pourvu d'un moyen (4) de contrôle de remplissage de la cellule. Selon un mode de réalisation préféré, le moyen (4) de contrôle de remplissage et la cellule de mesure (6) sont tous les deux du type capacitif et se présentent sous la forme de deux condensateurs (4a,4b; 6a,6b) de même configuration géométrique.

Fig.1

## Appareil de mesure en continu des teneurs en substances d'un produit granuleux, pulvérulent ou visqueux.

L'invention concerne un appareil de mesure en continu des teneurs en substances d'un produit granuleux, pulvérulent ou visqueux et plus particulièrement un appareil pour mesurer la teneur en humidité des céréales.

Il est important de pouvoir mesurer la teneur en humidité des céréales et plus particulièrement des céréales en grains, par exemple à l'entrée et/ou à la sortie des séchoirs à grains, ou encore pour envisager une rehumidification éventuelle des grains en vue de leur stockage et/ou de leur conservation.

Les matériels existants sont basés sur divers principes techniques, tels que ceux faisant appel à des mesures par infrarouge, par hyperfréquences ou ceux du type capacitif.

Les techniques par infrarouge et par hyperfréquences, sont particulièrement couteuses et nécessitent des recalibrages fréquents des appareils. C'est pourquoi la technique capacitive est généralement la technique choisie pour ce type de mesure comme décrit, par exemple, dans le brevet Francais 2389179.

Toutefois, si le brevet précité concerne une mesure statique, pour effectuer une mesure en continu, on fait par exemple passer le produit dans une cellule de mesure, tandis qu'un système de traitement des informations provenant de la cellule est prévu pour établir la mesure en fonction desdites informations qui dépendent de la nature du produit.

Toutefois, dans les systèmes connus, la mesure peut être faussée du fait d'un mauvais remplissage de la cellule.

Les inventeurs on en effet trouvé que le bon remplissage de la cellule au moment de la mesure est indispensable à l'obtention d'une mesure fiable, en tenant compte du fait qu'il s'agit d'une cellule dans laquelle le produit n'est pas statique, mais circule, de telle sorte que le mot remplissage revet un sens en valeur instantanée.

C'est pourquoi l'invention propose un appareil du type précité, qui est remarquable en ce qu'il est pourvu d'un moyen de contrôle de remplissage de la cellule.

Selon un mode de réalisation préféré, le moyen de contrôle de remplisssge est un détecteur de présence aménagé en amont de la cellule de mesure.

Afin de tenir compte d'une certaine concentration du produit, le détecteur de présence est avantageusement muni d'un seuil de déclenchement qui est fonction de la concentration du produit par unité de volume mesuré.

En effet, le remplissage de la cellule n'a véritablement un sens qu'en fonction d'une certaine concentration ou un certain foisonnement du produit.

Quelle que soit la nature de l'appareil de mesure, le détecteur de présence est, par exemple, du type capacitif et se présente sous la forme d'un condensateur entre les armatures duquel passe le produit à analyser de telle sorte que la capacité du condensateur varie en fonction de la présence ou non du produit, chaque état donnant une valeur différente de la constante diélectrique tandis qu'un circuit électronique de traitement est prévu pour établir des mesures électriques qui sont fonction de ladite constante diélectrique.

Ce mode de réalisation est particulièrement bien adapté lorsque la cellule de mesure est également du type capacitif et se présente sous la forme d'un condensateur entre les armatures duquel passe le produit à analyser de telle sorte que la capacité du condensateur varie en fonction de la nature et de la constitution du produit, lesquelles déterminent une valeur variable de la constante diélectrique tandis que le système de traitement de la cellule est un circuit électronique prévu pour établir des mesures électriques qui sont fonction de ladite constante diélectrique. Avantageusement dans ce cas, le détecteur de présence est un condensateur de même configuration géométrique que celui de la cellule de mesure dont il est électriquement isolé, son circuit électronique de traitement et celui de la cellule étant connectés à une unité centrale de traitement et de mesure.

Selon un mode de réalisation du type précité comportant deux condensateurs, les armatures de la cellule et du détecteur se présentent sous la forme de deux demi-coquilles, chacune semi-cylindrique circulaire, chaque demi-coquille étant isolée électriquement de sa demi-coquille opposée et les deux demi-coquilles de la cellule étant isolées électriquement de celles du détecteur tout en étant disposées coaxialement de telle sorte que les demi-coquilles du détecteur et de la cellule forment un tube à l'intérieur duquel passe le produit à analyser.

Toutefois, le remplissage de la cellule est lié à la vitesse d'écoulement du produit et il est utile d'assurer une régulation de débit dans la cellule. C'est pourquoi l'invention propose un appareil muni d'un moyen de régulation de débit du produit disposé sous la cellule de mesure, qui est remarquable en ce que ledit moyen de régulation est pourvu d'un moyen de réglage sur lequel on peut agir en fonction des indications fournies par le moyen de contrôle de remplissage. En combinaison avec le fait que le détecteur de présence présente un seuil de déclenchement, il est alors possible, par exemple, de régler le moyen de régulation progressivement, à partir d'une circulation totalement ou presque totalement libre, jusqu 'à ce que le détecteur ait franchi ledit seuil.

Par exemple le moyen de régulation se présente sous la forme d'une trappe à ouverture modulable ou encore sous la forme d'une vis sans fin mûe à vitesse variable.

De cette façon, le contrôle de remplissage de la cellule et la régulation de débit du produit qui lui est associée, permettent d'améliorer la fiabilité des résultats tout en assurant une circulation du produit dans la cellule à une vitesse optimale.

L'invention prévoit en outre d'aménager un filtre dans le passage du produit, en amont mais au voisinage du détecteur, pour éliminer les grosses impuretés.

L'invention sera bien comprise et d'autres particularités apparaîtront à la lecture de la description qui va suivre et qui se réfère aux dessins annexés dans lesquels:

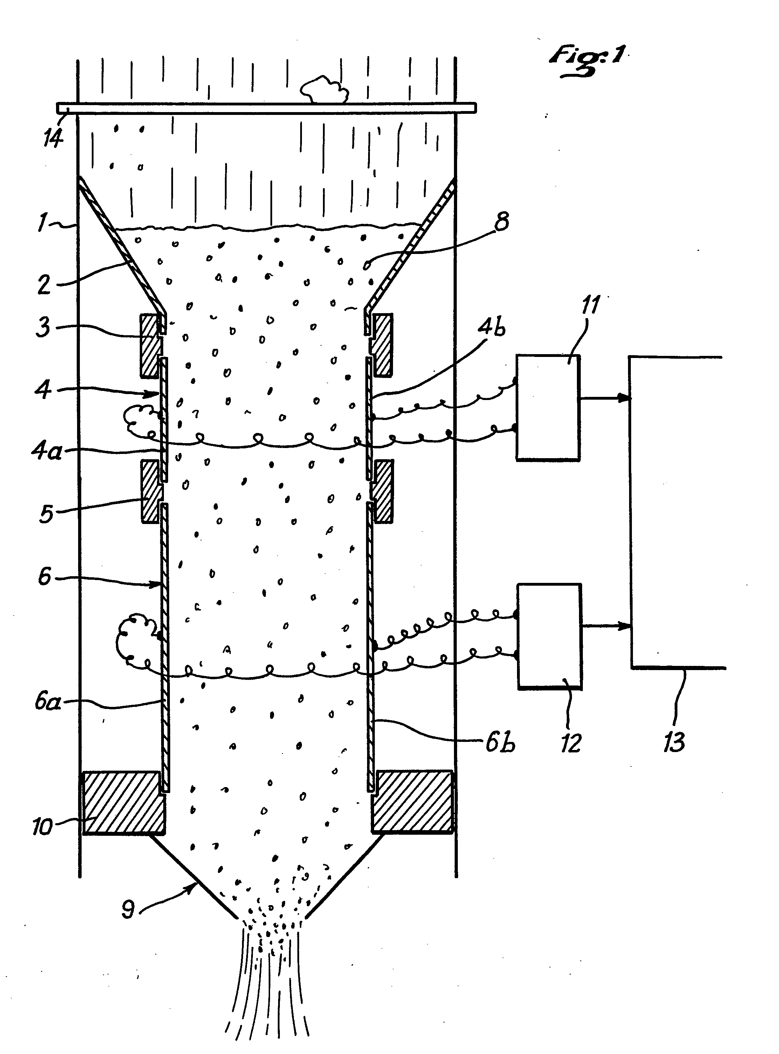

- la figure 1 est une coupe axiale schématique d'un appareil selon l'invention,

- la figure 2 est une vue de dessus de la figure 1, les armatures du condensateur constituant le détecteur étant légèrement grossies par rapport à la figure 1.

L'appareil selon l'invention est pourvu d'une enveloppe cylindrique externe 1 dans laquelle est aménagée une trémie d'entrée 2.

La trémie d'entrée 2 est isolée électriquement par un joint circulaire isolant 3, d'un premier condensateur cylindrique 4, lui-même isolé électriquement par un joint circulaire isolant 5 d'un autre condensateur cylindrique 6.

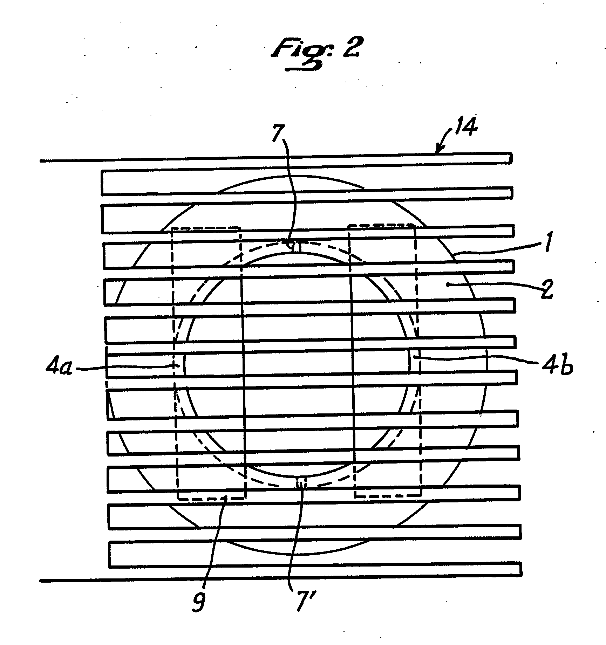

Comme le montrent bien les figures, les condensateurs 4 et 6 sont disposés coaxialement et sont formés chacun de deux demi-coquilles respectivement 4a, 4b et 6a, 6b formant les armatures desdits condensateurs. Chaque demi-coquille d'un condensateur est semi-cylindrique et se trouve électriquement isolée de sa demi-coquille opposée par des joints longitudinaux tels que 7 et 7' (figure 2).

C'est dans le tube formé par les condensateurs 4 et 6 que le produit à analyser 8 circule.

Sous le condensateur 6, est prévu un moyen de régulation de débit du produit à analyser, ici sous la forme d'une trappe 9 à ouverture réglable séparée dudit condensateur et de l'enveloppe 1 par un joint annulaire 10.

Le condensateur 4 constitue un détecteur de présence du produit et le condensateur 6 une cellule de mesure pour ledit produit.

Chaque demi-coquille 4a, 4b et 6a, 6b de chaque condensateur 4, 6 est reliée électriquement à un circuit électronique respectivement 11, 12.

Chaque circuit 11, 12 comporte par exemple un circuit oscillant de manière telle que l'on crée en sortie un signal dont la fréquence est une fonction de la capacité variable du condensateur correspondant 4, 6.

En effet, la capacité de chaque condensateur est une fonction de la constante diélectrique qui varie elle-même selon la présence, la nature et la constitution du produit.

Il est donc facilement compréhensible que le signal de sortie du circuit 11 puisse indiquer selon la mesure effectuée, la présence ou non du produit par distinction entre un diélectrique constitué d'air uniquement et un diélectrique constitué d'air et de produit.

Par ailleurs la teneur en humidité du produit modifie notamment sa constante diélectrique de telle sorte que le signal de sortie du circuit 12 est une fonction de sa teneur en humidité. Un correctif peut en outre être apporté au moyen d'une sonde de temperature, non représentée, puisque la constante diélectrique est également fonction de la température du produit.

Généralement, la géométrie du système dans lequel l'appareil est aménagé, permet d'obtenir un débit sensiblement fidèle et par un réglage donné du régulateur de débit, ici la trappe 9, il suffit de détecter la présence du produit grâce au condensateur 4 pour valider la mesure effectuée par le condensateur 6.

Toutefois, il est également prévu que le condensateur 4 soit muni d'un seuil de détection qui permet de régler convenablement la trappe 9 lorsqu' une concentration correcte de produit est détectée (par exemple sous forme d'un signal lumineux ou sonore ou par un système d'asservissement).

Les circuits 11 et 12 sont avantageusement connectés à une unité centrale de traitement 13, qui permet d'enregistrer et de traiter les signaux provenant desdits circuits 11 et 12. L'unité centrale de traitement 13 comporte par exemple un microprocesseur, un ordinateur, une imprimante, etc..

L'appareil décrit ci-avant est en outre muni d'un filtre 14 disposé juste au-dessus de la trémie d'entrée 2, afin d'arrêter les grosses impuretés susceptibles de fausser les mesures et/ou de causer un colmatage de la cellule de mesure. Ce filtre 14 est par exemple constitué par une grille ou des barreaux de la manière par exemple montrée plus particulièrement sur la figure 2.

Il est clair que les condensateurs 4 et 6 pourraient être différents et présenter par exemple des armatures cylindriques coaxiales plutôt que semi-cylindriques et opposées. En outre, le détecteur de présence et la cellule de mesure pourraient être basés sur d'autres techniques différentes entre elles ou non. C'est ainsi par exemple, que seul le détecteur de présence pourrait être basé sur la technique de mesure capacitive.

Par ailleurs, si le moyen de régulation représenté se présente sous la forme d'une trappe, un mode de réalisation tout à fait avantageux est pourvu d'une vis sans fin, dite vis d'Archimède.

Bien d'autres modifications ou variantes peuvent de toute façon être apportées au mode de réalisation décrit sans sortir pour cela du cadre de l'invention.

Enfin, si l'invention concerne plus particulièrement les produits granuleux, il est envisageable d'utiliser un tel appareil pour d'autres produits, par exemple pulvérulents, voire visqueux. De plus, si la description concerne plus spécialement un humidimètre, on comprend facilement qu'un tel appareil est susceptible de mesurer d'autres teneurs en substances, la cellule de mesure et/ou son circuit de traitement étant adaptés en conséquence (en restant éventuellement du type capacitif).

## Revendications

1) Appareil de mesure en continu des teneurs en substances d'un produit granuleux, pulvérulent ou visqueux, comportant une cellule de mesure (6) dans laquelle on fait passer le produit (8) à analyser, et un système (11) de traitement des informations provenant de la cellule, lesquelles dépendent de la présence et de la composition du produit, appareil caractérisé en ce qu'il est pourvu d'un moyen (4) de contrôle de remplissage de la cellule.

2) Appareil selon la revendication 1, caractérisé en ce que le moyen (4) de contrôle de remplissage est un détecteur de présence aménagé en amont de la cellule de mesure.

3) Appareil selon la revendication 2, caractérisé en ce que le détecteur de présence est muni d'un seuil de déclenchement qui est fonction de la concentration du produit par unité de volume mesuré.

4) Appareil selon l'une des revendications 2 et 3, caractérisé en ce que le détecteur de présence est du type capacitif et se présente sous la forme d'un condensateur (4) entre les armatures (4a,4b) duquel passe le produit (8) à analyser de telle sorte que la capacité du condensateur varie en fonction de la présence ou non du produit, chaque état donnant une valeur différente de la constante diélectrique tandis qu'un circuit électronique (12) de traitement est prévu pour établir des mesures électriques qui sont fonction de ladite constante diélectrique.

5) Appareil selon la revendication 4, dans lequel la cellule de mesure est du type capacitif et se présente sous la forme d'un condensateur (6) entre les armatures (6a,6b) duquel passe le produit (8) à analyser de telle sorte que la capacité du condensateur varie en fonction de la nature et de la constitution du produit, lesquelles déterminent une valeur variable de la constante diélectrique tandis que le système de traitement de la cellule est un circuit électronique prévu pour établir des mesures électriques qui sont fonction de ladite constante diélectrique, caractérisé en ce que le détecteur de présence est un condensateur de même configuration géométrique que celui de la cellule de mesure dont il est électriquement isolé, son circuit électronique de traitement (11) et celui (12) de la cellule étant connectés à une unité centrale (13) de traitement et de mesure.

6) Appareil selon la revendication 5, caractérisé en ce que les armatures (6a,6b; 4a,4b) de la cellule (6) et du détecteur (4) se présentent sous la forme de deux demi-coquilles, chacune semi-cylindrique circulaire, chaque demi-coquille étant isolée électriquement de sa demi-coquille opposée et les deux demi-coquilles de la cellule étant isolées électriquement de celles du détecteur tout en étant disposées coaxialement de telle sorte que les demi-coquilles du détecteur et de la cellule forment un tube à l'intérieur duquel passe le produit (8) à analyser.

7) Appareil selon l'une quelconque des revendications 1 à 6, muni d'un moyen de régulation (9) de débit du produit disposé sous la cellule de mesure, caractérisé en ce que le moyen de régulation est pourvu d'un moyen de réglage sur lequel on peut agir en fonction des indications fournies par le moyen de contrôle (4) de remplissage.

8) Appareil selon la revendication 7, caractérisé en ce que le moyen de régulation se présente sous la forme d'une trappe (9) à ouverture modulable.

9) Appareil selon la revendication 7, caractérisé en ce que le moyen de régulation est une vis sans fin mûe à vitesse variable.

10) Appareil selon l'une des revendications 1 à 9, caractérisé en ce qu'il est pourvu d'un filtre (14) disposé dans le passage du produit, en amont mais au voisinage du détecteur, pour éliminer les impuretés de dimensions importantes.

Fig:1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A,D | FR-A-2389179 (DICKEY-JOHN CORP.)<br>* abrégé * <br>--- | 1 | G01N27/22<br>G01N01/20<br>G01N33/10 |
| A | US-A-4499111 (H. OETIKER ET AL.)<br>* abrégé; figure 1 *<br>--- | 1 | |
| A | PATENT ABSTRACTS OF JAPAN<br>vol. 10, no. 271 (P-497)(2327) 16 septembre 1986,<br>& JP-A-61 93947 (NISSHIN FLOUR MILLING CO. LTD.)<br>12 mai 1986,<br>* le document en entier *<br>--- | 1 | |
| A | US-A-3566260 (J.A.JOHNSTON)<br>* abrégé; figures 1, 2 *<br>----- | 1 | |

|  | DOMAINES TECHNIQUES RECHERCHES (Int. Cl.5 ) |
|---|---|
|  | G01N |

Le présent rapport a été établi pour toutes les revendications

| Lieu de la recherche | Date d'achèvement de la recherche | Examinateur |
|---|---|---|
| LA HAYE | 25 JUILLET 1990 | BAROCCI S. |